# EUROPEAN PATENT SPECIFICATION

(11) **EP 1 853 061 B1**
(45) Date of publication and mention of the grant of the patent: **19.05.2010**
(21) Application number: 06009328.3
(22) Date of filing: 05.05.2006
(51) Int. Cl.: H04N 5/445

(54) **Digital television and/or audio reception device and mobile processing unit**
Empfangsgerät für Digitalfernsehen- und/oder -audio, und Mobilverarbeitungsteil
Dispositif de réception de télévision et/ou d'audio numérique, et unité mobile de traitement

(43) Date of publication of application: 07.11.2007
(73) Proprietor: APS ASTRA Platform Services GmbH, 85774 Unterföhring (DE)
(72) Inventor: Goebel, Stéphane, 81825 München (DE); Heichler, Johannes, 85570 Ottenhofen (DE); Eich, Jörg, 85435 Erding (DE); Wiedow, Uwe, 85435 Erding (DE); Kreilein, Max, 80797 München (DE); Urner, Wilfried, 81827 München (DE)
(74) Representative: Heselberger, Johannes

(56) References cited:
- EP-A- 1 650 971
- WO-A-2004/088983
- US-B1- 6 437 836

## Description

### 1. Technical field

The present invention relates to a digital television and / or audio reception device and a mobile processing unit.

### 2. The prior art

Mobile data processing units such as hand held computers, PDAs, intelligent mobile telephones, etc. are becoming more and more popular. One reason is that the multimedia capabilities of these devices are constantly increasing. For examples mobile telephones nowadays include a wide variety of functions which exceed the basic necessities of communication. Furthermore, the quality of the displays of the devices has dramatically improved over recent years so that high resolution color screens are now widely available.

One way of effectively using mobile data processing unit is to connect them to so-called set top boxes (STBs) of digital television and / or radio systems. Typically, such digital broadcast systems are capable of transmitting data with a high bandwidth from a broadcast station of a provider to a multitude of receivers, i.e. STBs, using for example a satellite link, a cable network or a terrestrial digital broadcast. The high bandwidth allows to include additional data in the stream of television and / or radio signals, for example additional information about an ongoing television show or electronic program guide information. The additional data is then forwarded from the STB to a mobile processing unit using for example an electromagnetic short range transmission standard such as BLUETOOTH^{®}. Such systems are for example known from the WO 2004/088983 A, the WO 2003/088027 A and the WO 03/088655 A.

However, the control of the presentation of the additional data by the mobile processing unit is difficult for the user of the described systems. One reason is that a mobile processing unit is typically not used for managing large amounts of structured data. The screen of a television system, on the other hand, is regarded from a certain distance and does often not provide a sufficient resolution for the presentation of greater amounts of textual information or other complex media contents. This is one of the reasons, why the described systems are until now restricted to the presentation of a limited amount of content to a user of the mobile data processing unit.

It is therefore a problem of the present invention to provide a digital television and / or audio reception device and a mobile processing unit which allow to present content by the mobile data processing unit in a way that is more intuitive for a user and easier to use than the techniques known in the prior art.

### 3. Summary of the invention

According to one aspect of the invention, this problem is solved by a digital television and / or audio reception device comprising a receiving unit adapted to receive a digital television and / or audio signal, the signal including an additional data stream for content to be presented by a mobile processing unit, in particular a mobile phone, an output unit for a first display means, in particular a television set, connected to or integrated with the digital television and / or audio reception device, the output unit adapted to output a signal for the display of a first plurality of selectable items on the first display means, and a transceiver unit adapted to send electromagnetic signals to the mobile processing unit, the electromagnetic signals causing a second display means of the mobile processing unit to display a second plurality of selectable items, wherein the second plurality of selectable items depend on a selected one of the first plurality of selectable items displayed by the first display means.

Preferably, the transceiver unit is further adapted to receive a request from the mobile processing unit for the content in response to the selection of one of the second plurality of items displayed by the second display means of the mobile processing. In a particularly preferred embodiment, the transceiver unit is further adapted to send the content to be presented by the mobile processing unit in response to the selection of one of the second plurality of items displayed by the second display means of the mobile processing unit.

Accordingly, the digital television and / or audio reception device therefore splits the navigation of the content between the first display means, for example the screen of a standard television set, and the second display means of the mobile processing unit. The electromagnetic signals exchanged between the digital reception device and the mobile processing unit provide a seamless link of the information presented on the two display means. As a result, a user trying to navigate through complex additional data content of a digital broadcast system is intuitively guided from the initial navigation steps on the first screen to one or more further navigation steps using the mobile processing unit.

In a preferred embodiment, the transceiver unit of the digital television and / or audio reception device is further adapted to receive control signals from the mobile processing unit for the selection of one of the first plurality of selectable items displayed by the first display means. The digital television and / or audio reception device may even be essentially fully remote controlled by the mobile processing unit. Thus, the mobile processing unit effectively replaces the standard remote control of the digital reception device (and possibly also of the attached or integrated television set) so that a user does not have to changeover between different input means for the navigation of the additional data.

The set up of the communication between the mobile data processing unit and the digital reception device can be significantly facilitated, if the transceiver unit is adapted to transmit control software to the mobile processing unit enabling the mobile processing unit to operate as mentioned above. To this end, it is preferred, if the receiving unit of the digital reception device is capable to receive the control software in the additional data stream included in the digital television and / or audio signal. The control software might for example be included every few minutes in the data carousel of the digital broadcast system so that it is almost immediately available for download from the digital reception device to the mobile data processing unit. Alternatively, however, the control software can also be downloaded via a communication network based, for example, on the GSM or UMTS standards, etc. to which the mobile data processing unit is connected, for example in response to an initializing SMS message to a provider.

The transition of a user from the first display means connected to the output of the digital reception device to the second display means of the mobile processing unit, is particularly easy, if the output unit is further adapted to output a signal for the display of a message on the first display means drawing the attention of a user to the second display of the mobile processing unit after one of the first plurality of selectable items has been selected.

When a user wants to obtain different content to be presented by his mobile data processing unit he may change the selected one of the first plurality of selectable items. This causes preferably the transceiver unit to send electromagnetic signals to the mobile processing unit, which in turn cause the second display means of the mobile processing unit to display a different second plurality of selectable items. In other words, the selections available on the second display means are preferably like a submenu dependent on the selection of the user in the main menu, i.e. among the first plurality of selectable items.

According to a further aspect, the present invention relates to a mobile processing unit, in particular a mobile phone, comprising a first transceiver unit for communicating with a digital television and / or audio reception device as described above and a second display means to display a second plurality of selectable items, wherein the second plurality of selectable items depend on a selected one of a first plurality of selectable items displayed by a first display means connect to or integrated with the digital television and / or audio reception device; and wherein the first transceiver unit is adapted to receive content from the digital television and / or audio reception device in response to selecting one of the second plurality of items.

Accordingly, the mobile data processing unit is the counterpart of the digital reception device of the present invention. Whereas the first plurality of selectable items are displayed by a first display means such as a television set, the second plurality of selectable items is displayed (and one of the items may finally be selected) under the control of the mobile processing unit. The split of the navigation between the first display means and the second display means of the mobile data processing unit avoids a large number of menu layers to navigate with the mobile processing unit. Therefore, a user may obtain the desired content from the digital reception device, for example a news article, on the second display of his mobile processing unit after pressing only a few buttons.

Preferably, the first transceiver unit is further adapted to transmit a signal to the digital television and / or audio reception device causing a selection of one of the first plurality of selectable items displayed in the first display means. As mentioned above, this option allows essentially to replace the standard remote control of the digital reception device and an attached or integrated television set.

In one embodiment, the mobile processing device comprises a second transceiver unit for a mobile telecommunication network, the second transceiver unit being adapted to send a request for the download of control software via the mobile telecommunication network enabling the mobile processing device to operate as described above. In another embodiment the first transceiver unit is adapted to send a request for the download of control software from the digital television and / or audio reception device enabling the mobile processing device to operate as mentioned above.

Further modifications of the digital reception device and the mobile data processing unit are described in further dependent claims.

### 4. Short description of the drawings

In the following detailed description presently preferred embodiments of the invention are described with reference to the drawings, which show:
- Fig. 1 :: An overview of a digital broadcasting system comprising embodiments of a digital reception device and a mobile processing unit in accordance with the present invention;
- Fig. 2:: An introductory page displayed on the screen of a television system;
- Fig. 3:: An embodiment of a first plurality of selectable items displayed on the television screen;
- Fig. 4:: An embodiment of a second plurality of selectable items presented on the screen of a mobile processing unit in response to the selection of one item of the first plurality of selectable items shown in Fig. 3;
- Fig. 5:: An exemplary embodiment of the content displayed on the screen of the mobile processing unit in response to the selection of an item of the second plurality; and
- Fig. 6:: An example of a message displayed on the screen of the television, after an item of the first plurality has been selected by a user.

### 5. Detailed description of preferred embodiments

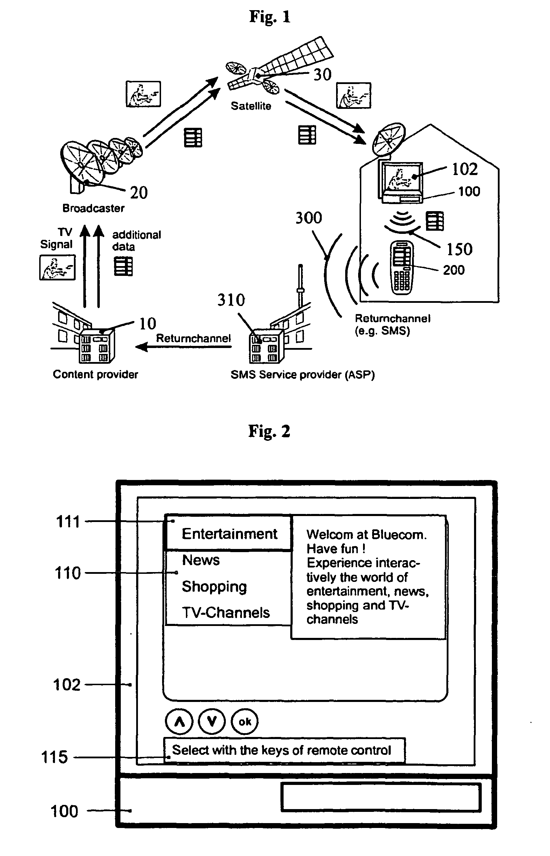

Fig. 1 presents an overview of a digital broadcasting system comprising among others a digital television and / or audio reception device ( STB 100) and a mobile processing unit (mobile phone 200). Such as system is for example generally described in the EP 1 650 971 A1 of applicant.

As can be seen, digital TV signals are provided together with additional data from a content provider 10 to a broadcaster 20 . Using a satellite link 30, the convoluted signal is broadcast to the STB 100. The TV signals are used to show the TV program of a selected TV channel on the screen 102 of a television set. The additional data are filtered out by the STB 100 and are transmitted to the mobile phone 200 for display to a user. Additionally, a return channel is provided, using preferably a mobile communications network 300 to which the mobile phone is attached. In the illustrated example, SMS messages are used as a return channel, which are received by an SMS service provider 310 and forwarded to the content provider 10 to create a closed feedback loop.

Numerous modifications of the above described system are possible. The broadcast signals may for example be only audio signals of a digital radio broadcast. Further, a cable network or a digital terrestrial broadcasting system may be used to transport the convoluted signal from the broadcaster to the STB 100 instead of or in addition to the satellite link 30. The specific convolutional technique used to combine the TV and / radio signals with the additional data may also vary but is preferably in agreement with the relevant standards (DVB, DAB, DVB-T, etc.). The transmission between the STB 100 and the mobile phone 200 uses preferably a BLUETOOTH^{®} based communication 150. However, other transmission techniques using for example infrared light or a WLAN are also conceivable. The return channel is only optional and can be realized in a number of different ways using instead of SMS messages a data channel of the mobile communications network, the technical details of which depend on the respective network standard (GSM, GPRS, UMTS etc.). Since the person skilled in the art is aware of the wide variety of possible hardware implementations possible for the transceiver units of the STB 100 and the mobile phone 200, these units are not described in further detail and not specifically shown in the figures.

The STB 100 may be a standard STB, separate from the television system 102 or be integrated with this device. Apart from the specific functionality described below, the STB 100 operates for processing the received TV signals in a manner, which is well known in the art. Further, the STB 100 filters out the additional data to be transmitted to the mobile phone 200 using standard techniques, as they are for example described in the prior art documents mentioned in the introductory part or in the above mentioned EP 1 650 971 A1 of applicant.

The mobile phone 200 is only one example of a large variety of mobile processing units, which can be used in the context of the present invention. PDAs with and without the capability to communicate over the mobile communications network 300 can be used as well as other intelligent devices such as (sub-) notebooks or the like. However due to their widespread use, intelligent mobile phones are the preferred embodiment of the present invention.

As a preliminary step to use an STB 100 in accordance with embodiments of the present invention, a user must install a suitable control software on his mobile phone 200. There are various possibilities, how a user can obtain this control software (in the following called "browser"). One option is to download the browser via the mobile communication network, for example by sending a corresponding SMS to a supplier of this software, for example the content provider 10, the broadcaster 20 or any other suitable entity.

Another option is to download the browser from the STB 100 via the BLUETOOTH^{®} link 150. To this end, the browser software can be included in the data carousel of the convoluted signal received by the STB 100 and optionally be stored in a memory of the STB (not shown) to be available for transmission to the mobile phone 200 upon a corresponding request. The transmission of the browser to the mobile phone 200 and its subsequent installation may be performed automatically, for example in response to initializing the communication link 150 to the STB. Alternatively, the download and / or the installation is started manually by a user of the mobile phone 200 inputting corresponding commands.

Clearly, there are further ways to install the browser software on the mobile phone such as a download from the Internet or some data carrier (CD, DVD, memory stick, etc.) onto a computer (not shown) from which the software is subsequently transmitted to the mobile phone 200 using an infrared port, a data cable or also a BLUETOOTH^{®} transmission.

To access the additional data in accordance with an embodiment of the present invention, the user tunes the STB 100 preferably in a first step to a dedicated channel using for example its remote control (not shown). The dedicated channel may for example be accessible as "channel 0" on the remote control. This leads to the display of a first menu 110 of selectable items on the screen 102 of the television set, as it is exemplary shown in Fig. 2. As can be seen, the user can select among a plurality of different categories of additional data, concerning in the presented exemplary embodiment entertainment, news, shopping and TV-channels. Whereas the embodiment of Fig. 1 uses a frame cursor 111 to highlight selected items, there are other options for an optical indication, which are know to the person skilled in the art.

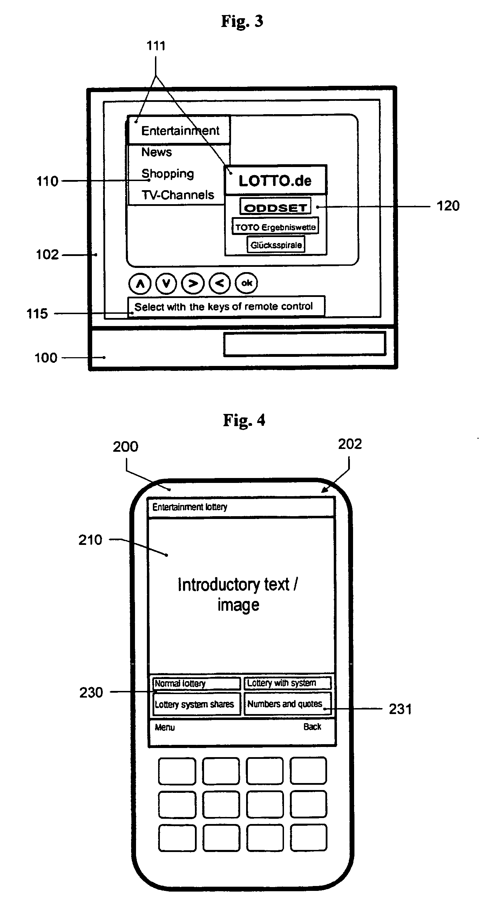

Selecting one category in the menu 110 of Fig. 2 leads to the presentation of a submenu 120, as exemplary shown in Fig. 3. In this (simplified) example the user has selected the category "entertainment". A submenu 120 is displayed with a plurality of lotteries, which can be selected for watching the latest draw or related lottery information. Again, a frame cursor 111 is shown, which allows to select one of the pluralities of lotteries.

Generally, the standard remote control of the STB 100 and / or the television set (not shown) can be used to navigate the menus 110, 120 shown in Figs. 2 and 3. Pressing "up" and "down" buttons and an "enter" button allows to change the position of the frame cursor 111 and to select a desired item. In an alternative embodiment, the mobile phone 200 can be used for the navigation through the menus 110, 120 presented on the screen 102 of the television set. To this end, the mobile phone 200 sends corresponding commands via the BLUTOOTH^{®} link to the STB 100, which are received and processed, wherein the results of the commands, however, are still presented on the screen 102 (for example moving the frame cursor 111 up or down).

This mode of operation may be more convenient, since the user will have to use the mobile phone 200 anyway for the further navigation steps described below. If the STB 100 is set up to be controlled by the mobile phone 200, the last line 115 in the display 102 shown in Figs. 2 and 3 will be different and preferably inform the user which keys of his phone 200 are adapted to control the operation of the STB 100. In one embodiment, the mobile phone 200 not only controls the STB 100 with respect to the navigation of the menus 110, 120 shown in Figs. 2 and 3 but fully replaces the standard remote control.

The concept to control an STB and / or a television set via a mobile phone is fully independent from the split navigation of additional content and may be also realized for controlling the operation of any ordinary STB and / or television or radio set.

Whereas the described example comprises only two navigation layers on the screen 102 of the televisions set (the menus 110 and 120), there may be less or more of such layers. For example, there could be only a single plurality of selectable menu items being presented before the navigation switches to the mobile phone 200, as explained below. Alternatively, there could be more than two layers of menus or other ways of presenting selectable items such as radio buttons or pull-down menus, etc., which are presented on the screen 102, before the navigation changes to the mobile phone 200.

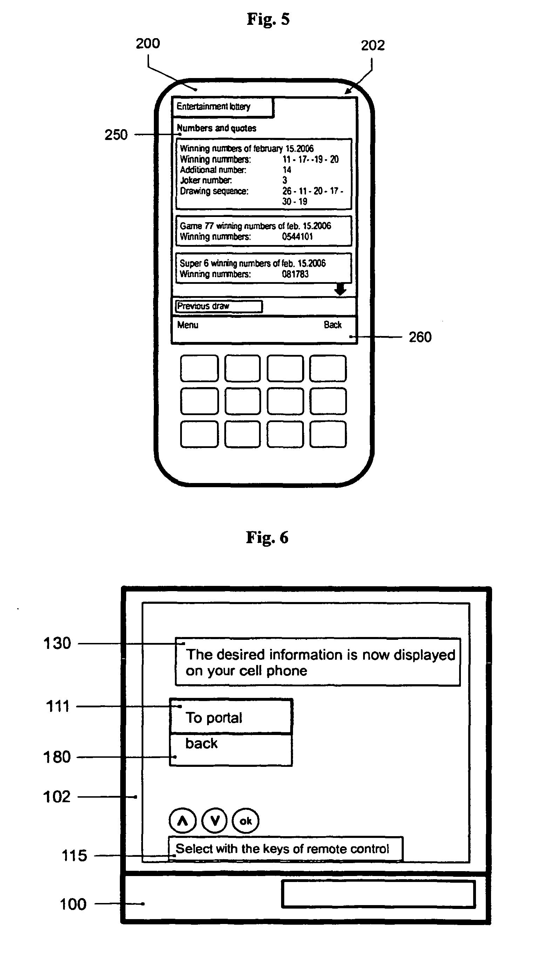

In the described embodiment, the selection of the item "LOTTO.de" in the menu 120 leads to the navigation of the information being handed over to the mobile phone 200. To simplify the process for the user, the screen 102 presents preferably a message 130, which directs the user to his mobile phone 200, as exemplary shown in Fig. 6.-However, the message 130 is only optional and there may be other ways of drawing the attention of the user to his mobile phone 200, for example an audio signal emitted by the phone 200 and / or a visual indication such as a blinking light or the like on the phone 200.

The message 130 may be present on the screen 102 as long as the mobile phone 200 navigates the further menus as described below. Alternatively, the message 130 may only remain on the screen 102 until the user has started to actually use his phone 200 for the further navigation steps, which is reported by sending a corresponding report signal back to the STB 100 after the first keystroke on the phone 200. In this alternative, the screen 102 may be used for other purposes, while the information concerning the selected item of the menu 120 is further navigated on the phone 200. The STB 100 may for example switch back to the last selected TV channel. Alternatively, the STB 100 may go back to present the initial screen of Fig. 2 and allow another user of a further mobile phone (not shown), which also communicates with the STB 100, to start the same navigation steps described above. Since BLUETOOTH^{®} is generally able to handle a plurality of devices communicating with each other, more than one mobile phone 200 can be linked to the STB 100 in the described manner for navigating complex information in order to obtain desired content.

Fig. 4 presents an embodiment of an initial display of a screen 202 of the mobile phone 200. Preferably, a part of the screen 202 presents an introductory message 210 and / or a picture informing the user about the further navigation steps to obtain the desired content which are to be performed on the mobile phone 200. The message 210 facilitates the transition in the user navigation from the screen 102 of the television set to the screen 202 of the mobile phone 200.

Another part of the screen 202 (or a subsequent screen following automatically after a few seconds or a confirming input from the user) presents a further plurality of selectable items. In the embodiment of Fig. 4, this further plurality is shown as the menu 230. Selecting one item 231 of this menu 230 provides the desired content 250, which is in the example illustrated in Fig. 5 the numbers and quotes of the lottery draw of February 15, 2006. Other examples may comprise also non-textual information such as images, audio files or even video clips to be presented on the screen 202.

The data of the content 250 is preferably sent from the STB 100 to the mobile phone 200 only in response to the above described final selection step. For example in the embodiment of Fig. 5, the results of the draw on February 15, 2006 were sent from the STB to the mobile phone only after the user pressed a key to select the item 231 in the menu 230. However, in another embodiment, the STB 100 starts to transmit data already, when a certain submenu is presented to a user. For example the STB 100 may already start to transmit lottery data corresponding to all four items of the menu 230, when the menu 230 is presented to a user.

An optimized approach for the decision when to transfer which data from the STB takes a number of parameters into account, such as the memory size of the mobile phone, which is available for the browser, the bandwidth of the BLUETOOTH^{®} link between the STB 110 and the phone 200, how often the data are updated from the content provider 10 etc.. For example in case of a comparatively small memory of the phone 200, the STB 100 will store as little data in the phone 200 as possible. By contrast, in case of a large phone memory, it might be an advantageous strategy to start early the transmission of data in order to avoid long waiting times before the desired content is downloaded from the STB 100 to the phone 200, in particular in case of large content files.

Whereas the embodiment described with respect to Figs. 4 and 5 uses only one menu 230 on the screen 202 of the mobile phone 200 to obtain the desired content 250, there may be additional navigational layers with further (sub-) menus or other navigation elements, similar to the case of the screen 102 discussed above.

The details of navigating one or more menus 230 on the screen 202 of the phone will depend on the browser running on the mobile phone 200, which in turn depends on the hardware of the phone and possibly on an operating system, which provides an intermediate layer between the application software of the browser and the hardware of the mobile phone 200.

If the user wants to subsequently select a different content, he can move back in the menu structure presented on the screen 202 of the phone. For example the screen shown in Fig. 5 presents an option 260 "Back", which will bring the mobile phone 250 back to the menu 230 shown in Fig. 4.

Moving further up, for example to a different category, can be achieved by directly navigating on the screen 102 shown in Fig. 6. As can be seen, there is a further menu 180, comprising among others the item "To portal". Selecting this option (using the remote control of the STB or the mobile phone as discussed above) brings the user directly back to the initial screen of Fig. 2. This is another advantage of the split navigation of the present invention. Selecting a different category (such a "News"), when starting from a submenu in the category "entertainment", as shown in Fig. 4, does not require a stepwise backtracking through a large number of (sub-) menus. Instead, using the first screen 102, the user can directly jump back to the general level and therefore easily and quickly reach new content to be presented on his phone 200.

In case the screen 102 no longer shows the display of Fig. 6, for example, if the STB switched (automatically) back to a TV channel, there might be a command provided in the browser, which brings the screen 102 immediately back, either into the state of Fig. 6 or directly back to the state of Fig. 2.

When switching back to a different category in the menu 110 of the screen 102, the screen 202 of the mobile phone 200 can either freeze the presented content or continue to present the content 250 until the navigation is handed back to the mobile phone 200, as described above with respect to Figs. 4 and 5. Again, this is a strategic decision, which depends, among others, on the memory size of the mobile phone 200 and the bandwidth of the BLUETOOTH^{®} link between the STB 110 and the phone 200.

## Claims

1. A digital television and / or audio reception device (100) comprising:
a. a receiving unit adapted to receive a digital television and / or audio signal, the signal including an additional data stream for content (250) to be presented by a mobile processing unit (200), in particular a mobile phone (200);
b. an output unit for a first display means (102), in particular a television set, connected to or integrated with the digital television and / or audio reception device (100), the output unit adapted to output a signal for the display of a first plurality (110, 120) of selectable items on the first display means (102); and
c. a transceiver unit adapted to send electromagnetic signals (150) to the mobile processing unit (200), the electromagnetic signals (150) causing a second display means (202) of the mobile processing unit (200) to display a second plurality (230) of selectable items, wherein the second plurality (230) of selectable items depend on a selected one of the first plurality (110, 120) of selectable items displayed by the first display means (102).

2. The digital television and / or audio reception device (100) of claim 1, wherein the transceiver unit is further adapted to receive a request from the mobile processing unit (200) for the content (250) in response to the selection of one of the second plurality (230) of items displayed by the second display means (202) of the mobile processing unit (200).

3. The digital television and / or audio reception device (100) of claim 1 or 2, wherein the transceiver unit is further adapted to send the content (250) to be presented by the mobile processing unit (200) in response to the selection of one of the second plurality (230) of items displayed by the second display means (202) of the mobile processing unit (200).

4. The digital television and / or audio reception device (100) of any of the preceding claims, wherein the transceiver unit is further adapted to receive control signals from the mobile processing unit (200) for the selection of one of the first plurality (110, 120) of selectable items displayed by the first display means (102).

5. The digital television and / or audio reception device (100) of the preceding claim, further being adapted to be essentially fully remote controlled by the mobile processing unit (200).

6. The digital television and / or audio reception device (100) of any of the preceding claims, wherein the first plurality (110, 120) of selectable items is presented as a menu (110) comprising at least one layer of submenus (120)

7. The digital television and / or audio reception device (100) of any of the preceding claims, wherein the transceiver unit is adapted to transmit control software to the mobile processing unit (200) enabling the mobile processing unit (200) to operate as mentioned in any of the preceding claims.

8. The digital television and / or audio reception device (100) of the preceding claim, wherein the receiving unit is capable to receive the control software in the additional data stream included in the digital television and / or audio signal.

9. The digital television and / or audio reception device (100) of any of the preceding claims, wherein the output unit is further adapted to output a signal for the display of a message (130) on the first display means (102) drawing the attention of a user to the second display (202) of the mobile processing unit (200) after one of the first plurality (110, 120) of selectable items has been selected.

10. The digital television and / or audio reception device (100) of any of the preceding claims, wherein changing the selected one of the first plurality (110, 120) of selectable items causes the transceiver unit to send electromagnetic signals (150) to the mobile processing unit (200), the electromagnetic signals (150) causing the second display means (202) of the mobile processing unit (200) to display a different second plurality of selectable items.

11. The digital television and / or audio reception device (100) of any of the preceding claims, wherein the output unit is adapted to output signals corresponding to a plurality of television and / or radio channels and wherein the output unit outputs the signal for the display of the first plurality (110, 120) of selectable items in response to switching the digital television and / or audio reception device (100) to a dedicated channel.

12. The digital television and / or audio reception device (100) of the preceding claim, wherein switching back from the dedicated channel to one of the plurality of television and / or radio channels causes the transceiver unit to send a signal to the mobile processing unit (200) to erase or freeze the content (250) currently presented by the mobile processing unit (200).

13. A mobile processing unit (200), in particular a mobile phone (200), comprising
a. a first transceiver unit for communicating with a digital television and / or audio reception device (100) of any of the preceding claims; and
b. a second display means (202) to display a second plurality (230) of selectable items, wherein the second plurality (230) of selectable items depend on a selected one of a first plurality (110, 120) of selectable items displayed by a first display means (102) connect to or integrated with the digital television and / or audio reception device (100); and
c. wherein the first transceiver unit is adapted to receive content (250) from the digital television and / or audio reception device (100) in response to selecting one of the second plurality (230) of items.

14. The mobile processing device (200) of claim 13, wherein the first transceiver unit is further adapted to transmit a signal to the digital television and / or audio reception device (100) causing a selection of one of the first plurality (110, 120) of selectable items displayed in the first display means (102).

15. The mobile processing device (200) of claim 13 or 14, comprising a second transceiver unit for a mobile telecommunication network (300), the second transceiver unit adapted to send a request for the download of control software via the mobile telecommunication network (300) enabling the mobile processing device (200) to operate as mentioned in any of the preceding claims.

16. The mobile processing device of any of the claims 13 - 15, wherein the first transceiver unit is adapted to send a request for the download of control software from the digital television and / or audio reception device (100) enabling the mobile processing device (200) to operate as mentioned in any of the preceding claims.

17. The mobile processing device (200) of any of the claims 13 - 16, wherein the second plurality (230) of options is presented as a menu comprising at least one layer of submenus.

## Patentansprüche

1. Ein digitales Fernseh- und / oder Audio-Empfangsgerät (100), aufweisend:
a. eine Empfangseinheit, die geeignet ist zum Empfangen eines digitalen Fernseh- und / oder Audio-Signals, wobei das Signal einen zusätzlichen Datenstrom für Inhalte (250) umfasst, der von einem mobilen Verarbeitungsgerät (200), insbesondere einem Mobiltelefon (200) dargestellt werden soll,
b. eine Ausgabeeinheit für ein erstes Displaymittel (102), insbesondere einen Fernsehapparat, der mit dem digitalen Fernseh- und / oder Audio-Empfangsgerät (100) verbunden und / oder integriert ist, wobei die Ausgabeeinheit geeignet ist zum Ausgeben eines Signals für das Display aus einer ersten Mehrzahl (110, 120) auswählbarer Elemente auf dem ersten Displaymittel (102); und
c. eine Transceivereinheit, die ausgebildet ist zum Senden elektromagnetischer Signale (150) an das mobile Verarbeitungsgerät (200), wobei die elektromagnetischen Signale (150) ein zweites Displaymittel (202) des mobilen Verarbeitungsgeräts (200) dazu veranlassen, eine zweite Mehrzahl (230) auswählbarer Elemente anzuzeigen, wobei die zweite Mehrzahl (230) auswählbarer Elemente von einem ausgewählten ersten Element der ersten Mehrzahl (110, 120) auswählbarer Elemente abhängt, die von dem ersten Displaymittel (102) angezeigt werden.

2. Das digitale Fernseh- und / oder Audio-Empfangsgerät (100) des Anspruchs 1, wobei die Transceivereinheit ferner geeignet ist zum Empfangen einer Anfrage von dem mobilen Verarbeitungsgerät (200) nach Inhalten (250) in Antwort auf das Auswählen eines Elements aus der zweiten Mehrzahl (230) von Elementen, die durch das zweite Displaymittel (202) des mobilen Verarbeitungsgeräts (200) angezeigt werden.

3. Das digitale Fernseh- und / oder Audio-Empfangsgerät (100) nach Anspruch 1 oder 2, wobei die Transceivereinheit ferner geeignet ist zum Senden von Inhalten (250), der von dem mobilen Verarbeitungsgerät (200) in Antwort auf das Auswählen eines Elements aus der zweiten Vielzahl (230) von Elementen dargestellt werden soll, die von dem zweiten Displaymittel (202) der mobilen Verarbeitungseinheit (200) angezeigt werden.

4. Das digitale Fernseh- und/oder Audio-Empfangsgerät (100) nach einem der vorhergehenden Ansprüche, wobei die Transceivereinheit ferner geeignet ist zum Empfangen von Steuerungssignalen von der mobilen Verarbeitungseinheit (200) zur Auswahl eines Elements aus der ersten Mehrzahl (110, 120) auswählbarer Elemente, die von dem ersten Displaymittel (102) angezeigt werden.

5. Das digitale Fernseh- und / oder Audio-Empfangsgerät (100) gemäß dem vorhergehenden Anspruch, das weiterhin dazu geeignet im Wesentlichen vollständig aus der Ferne von dem mobilen Verarbeitungsgerät (200) gesteuert zu werden.

6. Das digitale Fernseh- und / oder Audio-Empfangsgerät (100) nach einem der vorhergehenden Ansprüche, wobei die erste Mehrzahl (110, 120) auswählbarer Elemente als ein Menü (110) dargestellt ist, das zumindest eine Schicht von Untermenüs (120) umfasst.

7. Das digitale Fernseh- und / oder Audio-Empfangsgerät (100) nach einem der vorhergehenden Ansprüche, wobei die Transceivereinheit geeignet ist zum Übertragen von Steuerungs-Software an das mobile Verarbeitungsgerät (200), die das mobile Verarbeitungsgerät (200) in die Lage versetzt zu arbeiten wie es in irgendeinem der vorhergehenden Ansprüche angeführt worden ist.

8. Das digitale Fernseh- und / oder Audio-Empfangsgerät (100) nach dem vorhergehenden Anspruch, wobei die Empfangseinheit in der Lage ist die Steuerungs-Software in dem zusätzlichen Datenstrom zu empfangen, der in dem digitalen Fernseh- und / oder Audio-Signal eingeschlossen ist.

9. Das digitale Fernseh- und / oder Audio-Empfangsgerät (100) nach einem der vorhergehenden Ansprüche, wobei die Ausgabeeinheit ferner geeignet ist zum Ausgeben eines Signals zum Anzeigen einer Nachricht (130) auf dem ersten Displaymittel (102), das die Aufmerksamkeit eines Nutzers auf das zweite Display (202) des mobilen Verarbeitungsgeräts (200) lenkt, nachdem ein erstes Element aus der ersten Mehrzahl (110, 120) auswählbarer Elemente ausgewählt worden ist.

10. Das digitale Fernseh- und / oder Audio-Empfangsgerät (100) nach einem der vorhergehenden Ansprüche, wobei das Ändern des ausgewählten ersten Elements aus der ersten Mehrzahl (110, 120) auswählbarer Elemente die Transceivereinheit zum Senden elektromagnetischer Signale (150) an das mobile Verarbeitungsgerät (200) veranlasst, wobei die elektromagnetischen Signale (150) das zweite Displaymittel (202) der mobilen Verarbeitungseinheit (200) zum Anzeigen einer unterschiedlichen zweiten Mehrzahl auswählbarer Elemente veranlasst.

11. Das digitale Fernseh- und / oder Audio-Empfangsgerät (100) nach einem der vorhergehenden Ansprüche, wobei die Ausgabeeinheit geeignet ist zum Ausgeben von Signalen, die einer Mehrzahl von Fernseh- und/oder Rundfunkkanälen entsprechen und wobei die Ausgabeeinheit das Signal zum Ausgeben der ersten Mehrzahl (110, 120) auswählbarer Elemente in Antwort auf das Schalten des digitalen Fernseh- und / oder Audio-Empfangsgeräts (100) zu einem dedizierten Kanal ausgibt.

12. Das digitale Fernseh- und / oder Audio-Empfangsgerät (100) nach dem vorhergehenden Anspruch, wobei das Zurückschalten von dem dedizierten Kanal zu einem aus der Mehrzahl von Fernseh- und / oder Rundfunkkanälen die Transceivereinheit dazu veranlasst ein Signal an das mobile Verarbeitungsgerät (200) zum Löschen oder Einfrieren von Inhalten (250) zu senden, die gegenwärtig von dem mobilen Verarbeitungsgerät (200) dargestellt werden.

13. Ein mobiles Verarbeitungsgerät (200), insbesondere ein Mobiltelefon (200), aufweisend
a. eine erste Transceivereinheit zum Kommunizieren mit einem digitalen Fernseh- und / oder Audio-Empfangsgerät (100) nach einem der vorhergehenden Ansprüche; und
b. ein zweites Displaymittel (202) zum Anzeigen einer zweiten Mehrzahl (230) auswählbarer Elemente, wobei die zweite Mehrzahl (230) auswählbarer Elemente von dem ausgewählten ersten Element aus der ersten Mehrzahl (110, 120) auswählbarer Elemente abhängt, die von einem ersten Displaymittel (102) dargestellt werden, das mit dem digitalen Fernseh- und / oder Audio-Empfangsgerät (100) verbunden oder darin integriert ist; und
c. wobei die erste Transceivereinheit geeignet ist zum Entfernen von Inhalten (250) von dem digitalen Fernseh- und / oder Audio-Empfangsgerät (100) in Antwort auf das Auswählen eines Elements aus der zweiten Mehrzahl (230) von Elementen.

14. Das mobile Verarbeitungsgerät (200) nach Anspruch 13, wobei die erste Transceivereinheit ferner geeignet ist zum Übertragen eines Signals an das digitale Fernseh- und / oder Audio-Empfangsgerät (100), das eine Auswahl von einem Element aus der ersten Mehrzahl (110, 120) auswählbarer Elemente bewirkt, die auf dem ersten Displaymittel (102) angezeigt werden.

15. Das mobile Verarbeitungsgerät (200) nach Anspruch 13 oder 14, aufweisend eine zweite Transceivereinheit für ein mobiles Telekommunikationsnetzwerk (300), wobei die zweite Transceivereinheit geeignet ist zum Senden einer Anfrage zum Herunterladen von Steuerungs-Software über das mobile Telekommunikationsnetzwerk (300), welches das mobile Verarbeitungsgerät 200 in die Lage versetzt, wie in irgendeinem der vorhergehenden Ansprüche genannt, zu arbeiten.

16. Das mobile Verarbeitungsgerät (200) nach einem der Ansprüche 13 bis 15, wobei die erste Transceivereinheit geeignet ist zum Senden einer Anfrage zum Herunterladen von Steuerungs-Software von dem digitalen Fernseh- und / oder Audio-Empfangsgerät (100), um das mobile Verarbeitungsgerät (200) in die Lage zu versetzen, wie in irgendeinem der vorhergehenden Ansprüche genannt, zu arbeiten.

17. Das mobile Verarbeitungsgerät (200) nach einem der Ansprüche 13 bis 16, wobei die zweite Mehrzahl (230) von Optionen als ein Menü dargestellt ist, das zumindest eine Schicht von Sub-Menüs umfasst.

## Revendications

1. Un dispositif (100) de réception de télévision et/ou d'audio numérique, comprenant :
a. une unité de réception apte à recevoir un signal de télévision et/ou d'audio numérique, le signal comprenant un flux de données additionnelles pour un contenu (250) devant être présenté sur une unité de traitement mobile (200), en particulier un téléphone portable (200) ;
b. une unité de sortie pour un premier moyen d'affichage (102), en particulier un poste de télévision, relié ou intégré au dispositif de réception de télévision et/ou d'audio numérique (100), l'unité de sortie étant apte à délivrer une sortie un signal pour l'affichage d'une première pluralité (110, 120) de rubriques sélectionnables sur le premier moyen d'affichage (102) ; et
c. une unité d'émission/réception apte à envoyer des signaux électromagnétiques (150) à l'unité de traitement mobile (200), les signaux électromagnétiques (150) provoquant l'affichage par un second moyen d'affichage (202) de l'unité de traitement mobile d'une seconde pluralité (230) de rubriques sélectionnables, où la seconde pluralité (230) de rubriques sélectionnables dépend de l'une sélectionnée de la première pluralité (110, 120) de rubriques sélectionnables affichées par le premier moyen d'affichage (102).

2. Le dispositif (100) de réception de télévision et/ou d'audio numérique de la revendication 1, dans lequel l'unité d'émission/réception est en outre apte à recevoir une requête provenant de l'unité de traitement mobile (200) pour le contenu (250) en réponse à la sélection de l'une de la seconde pluralité (230) de rubriques affichées par le second moyen d'affichage (202) de l'unité de traitement mobile (200).

3. Le dispositif (100) de réception de télévision et/ou d'audio numérique de la revendication 1 ou 2, dans lequel l'unité d'émission/réception est en outre apte à envoyer le contenu (250) devant être présenté par l'unité de traitement mobile (200) en réponse à la sélection de l'une de la seconde pluralité (230) de rubriques affichées par le second moyen d'affichage (202) de l'unité de traitement mobile (200).

4. Le dispositif (100) de réception de télévision et/ou d'audio numérique de l'une des revendications précédentes, dans lequel l'unité d'émission/réception est en outre apte à recevoir des signaux de contrôle en provenance de l'unité de traitement mobile (200) pour la sélection de l'une de la première pluralité (110, 120) de rubriques sélectionnables affichées par le premier moyen d'affichage (102).

5. Le dispositif (100) de réception de télévision et/ou d'audio numérique de la revendication précédente, apte en outre à être essentiellement contrôlé entièrement à distance par l'unité de traitement mobile (200).

6. Le dispositif (100) de réception de télévision et/ou d'audio numérique de l'une des revendications précédentes, dans lequel la première pluralité (110, 120) de rubriques sélectionnables est présentée sous forme d'un menu (110) comprenant au moins une couche de sous-menus (120).

7. Le dispositif (100) de réception de télévision et/ou d'audio numérique de l'une des revendications précédentes, dans lequel l'unité d'émission/réception est apte à transmettre un logiciel de contrôle à l'unité de traitement mobile (200) autorisant l'unité de traitement mobile (200) à opérer de la manière mentionnée dans l'une des revendications précédentes.

8. Le dispositif (100) de réception de télévision et/ou d'audio numérique de la revendication précédente, dans lequel l'unité de réception est apte à recevoir le logiciel de contrôle dans le flux de données additionnelles inclues dans le signal de télévision et/ou d'audio numérique.

9. Le dispositif (100) de réception de télévision et/ou d'audio numérique de l'une des revendications précédentes, dans lequel l'unité de sortie est en outre apte à délivrer en sortie un signal pour l'affichage d'un message (130) sur le premier moyen d'affichage (102) attirant l'attention d'un utilisateur sur le second afficheur (202) de l'unité de traitement mobile (200) après que l'une de la première pluralité (110, 120) de rubriques sélectionnables ait été sélectionnée.

10. Le dispositif (100) de réception de télévision et/ou d'audio numérique de l'une des revendications précédentes, dans lequel le changement de celle qui a été sélectionnée de la première pluralité (110, 120) de rubriques sélectionnables provoque l'envoi par l'unité d'émission/réception de signaux électromagnétiques (150) vers l'unité de traitement mobile (200), des signaux électromagnétiques (150) provoquant l'affichage par les seconds moyens d'affichage (202) de l'unité de traitement mobile (200) d'une seconde pluralité différente de rubriques sélectionnables.

11. Le dispositif (100) de réception de télévision et/ou d'audio numérique de l'une des revendications précédentes, dans lequel l'unité de sortie est apte à délivrer en sortie des signaux correspondant à une pluralité de canaux de télévision et/ou de radio et dans lequel l'unité de sortie délivre en sortie le signal pour l'affichage de la première pluralité (110, 120) de rubriques sélectionnables en réponse à la commutation du dispositif de réception de télévision et/ou d'audio numérique (100) sur un canal dédié.

12. Le dispositif (100) de réception de télévision et/ou d'audio numérique de la revendication précédente, dans lequel la commutation inverse depuis le canal dédié vers l'un de la pluralité de canaux de télévision et/ou de radio provoque l'envoi par l'unité d'émission/réception d'un signal vers l'unité de traitement mobile (200) pour effacer ou geler le contenu (250) en cours de présentation par le dispositif de traitement mobile (200).

13. Une unité de traitement mobile (200), en particulier un téléphone portable, comprenant :
a. une première unité d'émission/réception pour communiquer avec un dispositif de réception de télévision et/ou d'audio numérique (100) de l'une des revendications précédentes ; et
b. un second moyen d'affichage (202) pour afficher une seconde pluralité (230) de rubriques sélectionnables, où la seconde pluralité (230) de rubriques sélectionnables dépend de l'une sélectionnée d'une première pluralité (110, 120) de rubriques sélectionnables affichées par un premier moyen afficheur (102) connecté ou intégré au dispositif de réception de télévision et/ou d'audio numérique (100) ; et
c. dans lequel la première unité d'émission/réception est apte à recevoir un contenu (250) en provenance du dispositif de réception de télévision et/ou d'audio numérique (100) en réponse à la sélection de l'une de la seconde pluralité (230) de rubriques.

14. Le dispositif de traitement mobile (200) de la revendication 13, dans lequel la première unité d'émission/réception est en outre apte à émettre un signal vers le dispositif de réception de télévision et/ou d'audio numérique (100) provoquant une sélection de l'une de la première pluralité (110, 120) de rubriques sélectionnables affichées sur les premiers moyens d'affichage (102).

15. Le dispositif de traitement mobile (200) de la revendication 13 ou 14, comprenant une seconde unité d'émission/réception pour un réseau de télécommunication mobile (300), la seconde unité d'émission/réception étant apte à envoyer une requête pour le téléchargement d'un logiciel de contrôle via le réseau de télécommunication mobile (300) pour autoriser le dispositif de traitement mobile (200) à opérer de la manière mentionnée dans l'une des revendications précédentes.

16. Le dispositif de traitement mobile de l'une des revendications 13 à 15, dans lequel la première unité d'émission/réception est apte à envoyer une requête pour le téléchargement d'un logiciel de contrôle depuis le dispositif de réception de télévision et/ou d'audio numérique (100) pour autoriser le dispositif de traitement mobile (200) à opérer de la manière mentionnée dans l'une des revendications précédentes.

17. Le dispositif de traitement mobile (200) de l'une des revendications 13 à 16, dans lequel la seconde pluralité (230) d'options est présentée sous forme d'un menu comprenant au moins une couche de sous-menus.
